# EUROPEAN PATENT APPLICATION

(11) **EP 2 990 664 A1**
(43) Date of publication of application: **02.03.2016**
(21) Application number: 14182514.1
(22) Date of filing: 27.08.2014
(51) Int. Cl.: F15B 11/08

(54) **Hydraulic system**

(71) Applicant: Siemens Aktiengesellschaft, 80333 München (DE)
(72) Inventor: Vad, Claus, 7400 Herning (DK)

(57) **Abstract**

A hydraulic system (200) is provided comprising,
- at least one hydraulic actuator (230),
- means (220...223) in fluid communication with the at least one hydraulic actuator (230) for selectively distributing hydraulic fluid to and from that at least one hydraulic actuator (230),
- at least one source (210, 211) of hydraulic fluid in fluid communication with that distribution means (220...223)
- for supplying hydraulic fluid to the at least one hydraulic actuator (230), or
- for draining away hydraulic fluid from the at least one hydraulic actuator (230),

- means (217) communicating with the at least one source for controlling
- pressurizing of the hydraulic fluid into the at least one actuator (230), or
- the draining away of the hydraulic fluid from the at least one actuator (230).

Further, a pitch control system for a wind turbine and a method for operating a hydraulic system are suggested.

## Description

The invention relates to a hydraulic system, a pitch control system for a wind turbine and a method for operating a hydraulic system.

A wind turbine includes a tower to which a machine nacelle is mounted at its top end. A hub bearing rotor blades is mounted to a lateral end of the machine nacelle. For enhanced performance, wind turbines are usually provided with variable pitch blades. The pitch of the blades is adjusted by selective pivoting of the blades about their longitudinal axes, thereby enabling the wind turbine to perform at optimum efficiency in varying wind conditions, as well as aiding start-up of the wind turbine, and preventing over speed operation of the wind turbine in high wind velocities by feathering the blades.

To provide for a continuous control of wind turbine blade pitch, it is desirable to implement hydraulic control systems based on a hydraulic machinery transmitting hydraulic fluid (e.g. fluid based on oil) throughout the machine to various actuators like e.g. hydraulic motors and hydraulic cylinders. The fluid becomes pressurized according to the resistance present and is controlled directly or automatically by control valves and distributed through hoses and tubes.

For the hydraulic fluid to do work, it must flow to the actuators and/or motors, and then return to a reservoir. The path taken by hydraulic fluid is called a hydraulic circuit or hydraulic system.

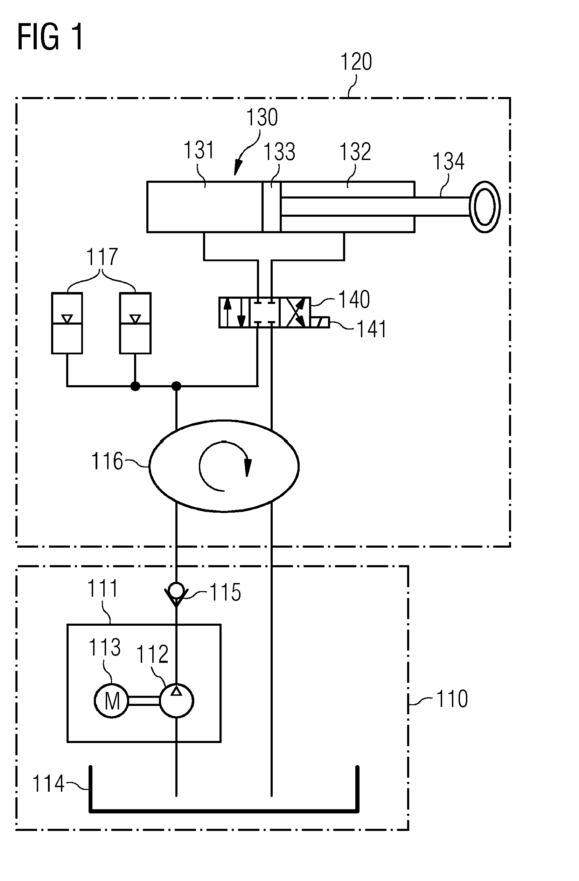

Fig.1 shows in a schematically view an exemplary conceptual embodiment of a hydraulic system 100 providing a continuous control of the pitch of a rotor blade.

It should be noted, that different embodiments of a hydraulic system are possible, wherein the use of such systems, as exemplarily shown by the embodiment of Fig.1, may not be limited to wind power systems. Moreover, each kind of hydraulic system may be addressed driving at least one actuator.

According to Fig.1, pressurized hydraulic fluid is provided from a source 111 located, e.g., in a nacelle 110 of a wind turbine (not shown) via distribution means like, e.g., valves and lines, to an actuator 130. The actuator 130 may be arranged in a rotor hub 120 of the wind turbine. The source 111 comprises a hydraulic pump 112 and a three-phased electrical motor 113. The hydraulic pump 112 is driven by the three-phased electrical motor 113 for supplying pressurized hydraulic fluid from a reservoir 114 towards the rotor hub 120 via a check valve 115 and through a rotating union 116 (also called "rotating unit") representing an rotational-stationary interface between the nacelle 110 and the rotor hub 120.

Within the rotor hub 120, the hydraulic fluid is further guided to hydro pneumatic accumulators 117 which are a common part of hydraulic machinery. Their function is to store energy by using pressurized gas. One exemplary embodiment of an accumulator is a tube with a floating piston. On one side of the piston is a charge of pressurized gas and on the other side is the hydraulic fluid. General examples of accumulator uses are backup power for steering or brakes or to act as a shock absorber for the hydraulic circuit.

From the pneumatic accumulators 117 the hydraulic fluid is directed to an actuator 130 via a proportional valve 140. General examples for actuators as a functional part of the hydraulic system are:
- Hydraulic cylinders
- Hydraulic motors
- Hydrostatic transmissions
- Brakes

The actuator 130 as shown in Fig.1 comprises a double acting cylinder with two chambers 131, 132 enclosing a piston 133 connected (according to the exemplary scenario shown in Fig.1) to a base of an allocated blade (not shown) by a connecting rod 134. The chambers 131, 132 are pressurized and drained in a usual manner as described further below via the distribution means causing the desired movement of the piston 133.

The flow of the hydraulic fluid, i.e. the pressurizing and draining of the chambers 131, 132, is controlled by the proportional valve 140 which is also called a "directional control valve" routing the hydraulic fluid to and from the desired chambers 131, 132 of the actuator 130.

The valve 140 usually consists of a spool 141 inside a cast iron or steel housing. The spool 141 slides to different positions in the housing, and intersecting grooves and channels route the fluid based on the spool's position. The spool 141 has a central (neutral) position (as exemplarily shown in Fig.1) maintained with springs; in this position the supply fluid is blocked or returned to the reservoir 114. Sliding the spool 141 to one side routes the hydraulic fluid to the actuator 130 or provides a return path from the actuator 130 via the rotating unit 116 to the reservoir 114. When the spool 141 is moved to the opposite direction the supply and return paths are switched. When the spool 141 is allowed to return to neutral (center) position the fluid paths are blocked, locking it in position.

During normal operation of the hydraulic circuit as shown in Fig.1 the pneumatic accumulators 117 have to be recharged regularly (e.g. twice a minute) - even without operating the valve 141 and/or the actuator 130. As a disadvantage, the recharging of the accumulators always has to be executed against high pressure which consequently results in a waste or loss of energy.

As a further disadvantage, additional directive control means are necessary for operating the hydraulic system, like, e.g. additional valves, controlling the flow of the fluid, i.e. the pressurizing and draining of the chambers.

The object is thus to overcome such disadvantages and in particular to provide an improved approach for operating a hydraulic system or circuit.

This problem is solved according to the features of the independent claims. Further embodiments result from the depending claims.

In order to overcome this problem, a hydraulic system is provided, comprising
- at least one hydraulic actuator,
- means in fluid communication with the at least one hydraulic actuator for selectively distributing hydraulic fluid to and from that at least one hydraulic actuator,
- at least one source of hydraulic fluid in fluid communication with that distribution means
- for supplying hydraulic fluid to the at least one hydraulic actuator, or
- for draining away hydraulic fluid from the at least one hydraulic actuator,
- means communicating with the at least one source for controlling
- pressurizing of the hydraulic fluid into the at least one actuator, or
- the draining away of the hydraulic fluid from the at least one actuator.

One advantage of the proposed solution is the decrease of wasting energy as no recharging of pneumatic accumulators is necessary to ensure pressurizing of the hydraulic fluid into the chambers of the actuator during normal operation. According to the proposed solution, supplying and draining of the hydraulic fluid may be directly steered by the source/sources of the hydraulic fluid under control of a central controller like, e.g., a central motor controller.

A further aspect of the suggested solution may be, e.g., a potential decrease of the number of components necessary to operate hydraulic systems. As an example, the directional control valve routing the hydraulic fluid to and from desired chambers of the actuator may be saved by controlling the flow, i.e. the pressurizing and the draining away of the hydraulic fluid directly via the appropriate operation of the source/sources of the hydraulic fluid.

Pursuant to another embodiment, said at least one source comprises at least one motor operating the source
- in a mode supplying the hydraulic fluid to the at least one hydraulic actuator, or
- in a mode draining away the hydraulic fluid from the at least one hydraulic actuator.

According to an embodiment, said control means comprises a motor controller communicating with the at least one motor and controlling the mode of operation of the at least one source.

According to another embodiment, the at least one motor is an electrical motor.

In yet another embodiment, the at least one source includes at least one hydraulic pump driven by the at least one motor.

According to a next embodiment,
- the at least one actuator comprises
   - a first chamber in fluid communication with a first one the at least one source via the distribution means, and
   - a second chamber in fluid communication with a second one of the at least one source via the distribution means, and
- the control means are configured in such a way, that
   - the first source is operating in the supplying mode, and
   - the second source is operating in the draining mode.

By controlling the mode of operation of the sources directly, the functionality of the at least one actuator can be steered without using additional means, like, e.g., directional control valves, for routing or guiding the hydraulic fluid to and from the actuator.

Pursuant to yet an embodiment,
- the at least one actuator comprises a piston communicating with the first and second chamber,
- the control means are configured such that a movement of the piston is controlled directly by a shaft speed of the at least one motor.

By controlling the shaft speed and the rotation direction of the at least one motor and thus of the at least on hydraulic pump, the pressurizing or draining away of the hydraulic fluid into or from the chamber can be steered directly via the central control means like, e.g., a central motor controller.

According to a further embodiment, at least one redundant source of hydraulic fluid in fluid communication with said distribution means for supplying hydraulic fluid to the at least one hydraulic actuator.

The redundant source of hydraulic fluid maybe used, e.g., as a backup system which may be used in case of emergency situations, like, e.g., a breakdown of the original source/sources or the central control means.

Pursuant to yet an embodiment, the at least one redundant source of hydraulic fluid includes at least one hydropneumatic accumulator supplying hydraulic fluid to the at least one actuator.

In a next embodiment, the at least one hydropneumatic accumulator is charged with hydraulic fluid by the at least one source

It is also an embodiment, that the hydraulic system is located in a wind turbine.

The problem stated above is also solved by a pitch control system for a wind turbine having a plurality of blades, comprising a hydraulic system as described herein.

According to an embodiment of the pitch control system, the at least one hydraulic actuator is communicating with one of said blades and adapted to pivot said blade about its longitudinal axis.

The at least one hydraulic actuator may include a piston being connected to a base of the blade allocated to the actuator by a connecting rod.

In addition, the problem stated above, is solved by a method for operating a hydraulic system comprising
- at least one hydraulic actuator,
- means in fluid communication with the at least one hydraulic actuator for selectively distributing hydraulic fluid to and from that at least one hydraulic actuator,
- at least one source of hydraulic fluid in fluid communication with that distribution means,
   - for supplying hydraulic fluid to the at least one hydraulic actuator, or
   - for draining away hydraulic fluid from the at least one hydraulic actuator,
   operating the at least one source in a mode
- pressurizing the hydraulic fluid into the at least one actuator, or
- draining away the hydraulic fluid from the least one actuator.

Embodiments of the invention are shown and illustrated in the following figure:

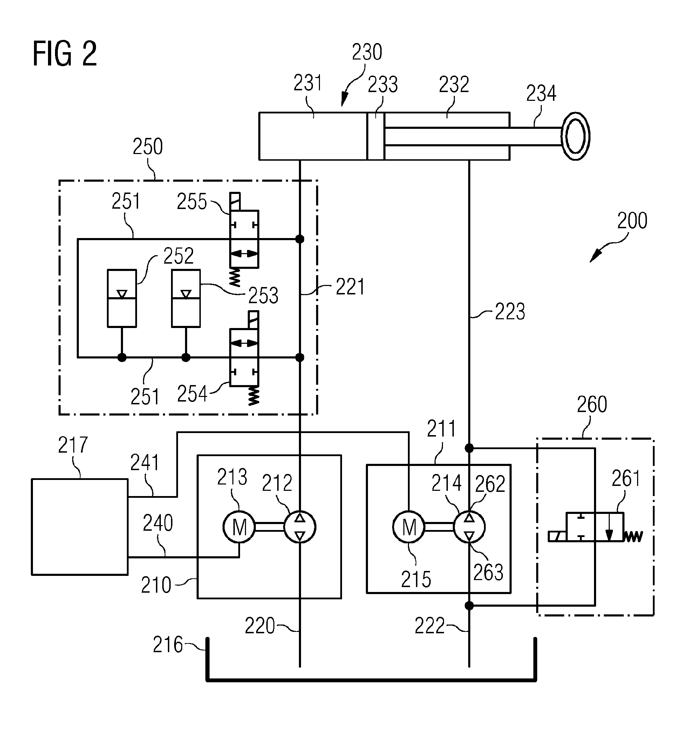

Fig.2 shows a schematic block diagram of an exemplary embodiment of a hydraulic system according to the proposed solution.

Fig.2 shows a schematic block diagram of an exemplary embodiment of a hydraulic system 200 according to the proposed solution.

A first and a second source 210, 211 providing pressurized hydraulic fluid are located in a rotor hub of a wind turbine (not shown). The first source 210 comprises a first hydraulic pump 212 driven by a first high precision electrical motor 213. The second source 211 comprises a second hydraulic pump 214, driven by a second high precision electrical motor 215.

Both sources 201, 211, i.e., the hydraulic pumps 212, 214 are suitable to be driven in a supplying mode for supplying or pumping hydraulic fluid form a reservoir 216 via distribution means like, e.g., lines 220...223 to an actuator 230. The hydraulic pumps 212, 214 are also suitable to be driven in a draining mode for draining or pumping hydraulic fluid away from the actuator 230 back to the reservoir 216 via the distribution means 230...223.

The actuator 230 comprises a double acting cylinder with a first chamber 231 in fluid communication with the first hydraulic pump 212 via the line 221 and with a second chamber 232 in fluid communication with the second hydraulic pump 214 via the line 223. The actuator 230 further includes a piston 233 connected to a base of an allocated blade (not shown) by a connecting rod 234.

The first and second electrical motor 213, 215 are communicating via connections lines 240, 241 with a central motor controller 217. The central motor controller 217 is configured such, that the first electrical motor 213 may be driven in a first direction, e.g., a forward direction and the second electrical motor 215 maybe driven in a second direction, e.g., a reverse direction and vice versa. Further, a shaft speed of each of the electrical motors 213, 215 is controlled individually by the central motor controller 217.

According to an exemplarily scenario, driving or moving the piston 233 to the right, the first source 210 is operated in the supplying mode and the second source 211 is operated in the draining mode. Correspondingly, the hydraulic pump 212 of the first source 210 is driven by the motor 213 in a supplying mode (e.g. in the forward direction), supplying, i.e., pumping hydraulic fluid from the reservoir 216 towards the actuator 230 and pressurizing the hydraulic fluid into the first chamber 231. According to the proposed solution, the hydraulic pump 214 of the second source 211 is driven by the motor 215 in an appropriate draining mode (e.g. in the reverse direction), draining, i.e., pumping away hydraulic fluid from the second chamber 232 back to the reservoir 216.

According to a further aspect of the proposed solution, the movement of the piston 233 and thus of the connecting rod 234 and in particular the speed of the movement of the piston 233 is controlled by the respective operation mode of the electrical motors 213, 215, notably by the rotating direction and by the shaft speed of the electrical motors 213, 215. Both parameters, i.e. "rotating direction" and "shaft speed" of each motor 213, 215 is controlled individually by the central motor controller 217.

It should be noted, that further parameters regulating the operation of the respective electrical motor 213, 215 and thus regulating the operation of the respective hydraulic pump 212, 214 maybe controlled individually by the central motor controller 217.

Driving or moving the piston 233 to the reverse direction, i.e., to the left, the operation mode of both sources 210, 211 will be switched by the central motor controller 217, i.e., the first source 210 is operated in the draining mode and the second source 211 is operated in the supplying mode.

For that, the hydraulic pump 212 of the first source 210 is driven by the electrical motor 213 in a draining mode (e.g. in the reverse direction), draining away, i.e., pumping the hydraulic fluid from the first chamber 231 back to the reservoir 216. Accordingly, the hydraulic pump 214 of the second source 211 is driven by the electrical motor 215 in a supplying mode (e.g. in the forward direction), supplying, i.e., pumping the hydraulic fluid from the reservoir 216 toward the actuator 230 und pressurizing the hydraulic fluid into the second chamber 232.

Optionally, the hydraulic system 200 may be equipped with a redundant source as a backup system, e.g., to ensure emergency pitch availability. According to Fig.2, a first and a second hydropneumatic accumulator 252, 253 are installed in a backup circuit 250 (visualized with a dotted line in Fig.2) being part of the backup system. Both accumulators 252, 253 are in fluid communication via lines 251 and via valves 254, 255 with the first chamber 231 of the actuator 230 and with the pump 212 of the first source 210. Both hydropneumatic accumulators 252, 253 may have to be recharged regularly by the first source 210 via at least one of the valves 254, 255. In case of an emergency situation like, e.g., in case of any breakdown of the sources 210, 211, at least the chamber 231 of the actuator 230 can be filled with pressurized hydraulic fluid supplied by the hydropneumatic accumulators 252, 253 to ensure, e.g., the feathering of the blades.

As a further option, a first and second access 262, 263 of the second pump 214 maybe bypassed by a further valve 261 being part of a further circuit 260 (visualized with a dotted line in Fig.2) which is also allocated to the backup system. Thus, in case of the emergency situation mentioned above, in particular in case of a complete blocking of the second source 211, the chamber 232 of the actuator 230 may be drained anytime via the valve 261 to ensure, e.g., the feathering of the blades.

One advantage of the proposed solution is the decrease of wasting energy as no recharging of pneumatic accumulators is necessary to ensure pressurizing of the hydraulic fluid into the chambers of the actuator during normal operation. According to the proposed solution, supplying and draining of the hydraulic fluid may be directly steered by the source/sources of the hydraulic fluid under control of a central controller like, e.g., a central motor controller.

A further aspect of the suggested solution may be, e.g., a potential decrease of the number of components necessary to operate hydraulic systems.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

Thus, different embodiments of a hydraulic system are possible according to the proposed solution, wherein the use of such systems may not be limited to wind power systems. Moreover, each kind of hydraulic system may be possible driving at least one actuator. Further exemplary scenarios for hydraulic systems according to the proposed solution are:
- Hydraulic brake systems
- Hydraulic drive systems
- Hydraulic excavators

## Claims

1. A hydraulic system (200) comprising
- at least one hydraulic actuator (230),
- means (220...223) in fluid communication with the at least one hydraulic actuator (230) for selectively distributing hydraulic fluid to and from that at least one hydraulic actuator (230),
- at least one source (210, 211) of hydraulic fluid in fluid communication with that distribution means (220...223)
- for supplying hydraulic fluid to the at least one hydraulic actuator (230), or
- for draining away hydraulic fluid from the at least one hydraulic actuator (230),
- means (217) communicating with the at least one source (210, 211) for controlling
- pressurizing of the hydraulic fluid into the at least one actuator (230), or
- the draining away of the hydraulic fluid from the at least one actuator (230).

2. The hydraulic system according to claim 1, wherein said at least one source (210, 211) comprises at least one motor (213, 215) operating the source (210, 211)
- in a mode supplying the hydraulic fluid to the at least one hydraulic actuator (230), or
- in a mode draining away the hydraulic fluid from the at least one hydraulic actuator (230).

3. The hydraulic system according to claim 2, wherein said control means (217) comprise a motor controller communicating with the at least one motor (213, 215) and controlling the mode of operation of the at least one source (210, 211).

4. The hydraulic system according to claim 2 or 3, wherein the at least one motor is an electrical motor.

5. The hydraulic system according to any of the preceding claims 2 to 4, wherein
the at least one source (210, 211) includes at least one hydraulic pump (212, 214) driven by the at least one motor (213, 215).

6. The hydraulic system according to any one of the preceding claims 2 to 5, wherein
- the at least one actuator (230) comprises
- a first chamber (231) in fluid communication with a first one (210) the at least one source (210, 211) via the distribution means (220...223), and
- a second chamber (232) in fluid communication with a second one (211) of the at least one source (210, 211) via the distribution means (220...223), and
- the control means (217) are configured in such a way, that
- the first source (210) is operating in the supplying mode, and
- the second source (211) is operating in the draining mode.

7. The hydraulic system according to claim 6, wherein
- the at least one actuator (230) comprises a piston (233) communicating with the first and second chamber (231, 232),
- the control means (217) are configured such that a movement of the piston (233) is controlled directly by a shaft speed of the at least one motor (213, 215).

8. The hydraulic system according to any of the preceding claims, comprising
at least one redundant source (250) of hydraulic fluid in fluid communication with said distribution means (220...223) for supplying hydraulic fluid to the at least one hydraulic actuator (230).

9. The hydraulic system according to claim 8, wherein the at least one redundant source (250) of hydraulic fluid includes at least one hydropneumatic accumulator (252, 253) supplying hydraulic fluid to the at least one actuator (230).

10. The hydraulic system according to claim 8 or 9, wherein the at least one hydropneumatic accumulator (252, 253) is charged with hydraulic fluid by the at least one source (210, 211).

11. Hydraulic system according to any of the preceding claims, located in a wind turbine.

12. A pitch control system for a wind turbine having a plurality of blades, comprising
a hydraulic system according to any of the preceding claims 1 to 11.

13. The pitch control system according to claim 12, wherein the at least one hydraulic actuator (230) is communicating with one of said blades and is adapted to pivot said blade about its longitudinal axis.

14. A method for operating a hydraulic system comprising
- at least one hydraulic actuator (230),
- means (220...223) in fluid communication with the at least one hydraulic actuator (230) for selectively distributing hydraulic fluid to and from that at least one hydraulic actuator (230),
- at least one source (210, 211) of hydraulic fluid in fluid communication with that distribution means (220,223),
- for supplying hydraulic fluid to the at least one hydraulic actuator (230), or
- for draining away hydraulic fluid from the at least one hydraulic actuator (230), operating the at least one source (210, 211) in a mode
- pressurizing the hydraulic fluid into the at least one actuator (230), or
- draining away the hydraulic fluid from the least one actuator (230).
